# EUROPEAN PATENT APPLICATION

(11) **EP 3 376 027 A1**
(43) Date of publication of application: **19.09.2018**
(21) Application number: 18151740.0
(22) Date of filing: 15.01.2018
(51) Int. Cl.: F03D 9/00, F03D 3/00, F03D 3/06, H02S 10/12, H02S 20/32

(54) **HYBRID DEVICE FOR GENERATING CLEAN ELECTRIC POWER**

(30) Priority: 17.03.2017 BR 102017005506
(71) Applicant: Azevedo Borba, Alexandre, RJ, CEP 22793-3 Rio de Janeiro (BR)
(72) Inventor: Azevedo Borba, Alexandre, RJ, CEP 22793-3 Rio de Janeiro (BR)
(74) Representative: Lourenço Martinho do Rosário, Ana Margarida

(57) **Abstract**

It is described a hybrid device for generating clean electric power (10) comprising a wind power generation module (11) and at least one solar power generation module (12), said wind power generation module (11) formed by a vertical generator (13), and said solar energy generation module (12) formed by at least one solar energy capturing plate (14), the vertical generator (13) of the wind power generation module (11) comprises a plurality of blades (15) axially and concentrically disposed relative to a central shaft (111) of the vertical generator (13), said blades (15) being manufactured from polyethylene terephthalate and arranged in the central shaft (111) at an offset angle between each other, and the wind power generation module(ll) receives in its upper portion at least one solar energy generation module (12) in order to provide electric power cogeneration, said generation module (12) comprising at least one solar energy capturing plate (14) supported by a hydraulic mechanism that moves the solar energy capturing plate (14) so as to position it in more favourable directions for capturing solar energy throughout the day.

## Description

The present invention relates to a hybrid electric power generation device, formed by wind power generation modules and solar power generation modules, particularly applied to energy microgeneration in order to expand the cogeneration capacity of electric energy in a simple and sustainable way.

### PRIOR ART DESCRIPTION

Microgeneration consists of the generation by individuals, small businesses or communities of clean or renewable energy from the heat or power of the winds and water. Among the technologies used for microgeneration there are small wind turbines or water turbines, heat pumps, solar and photovoltaic panels.

Some of the known advantages of energy microgeneration are: (I) production of electricity at points of consumption (residences, for instance); (ii) use of solar photovoltaic and wind power sources independently or combined in hybrid plants; (iii) sharing of the load supply system, so that when the generation is greater than the consumption, the surplus energy is injected into the electric grid; among others.

In Brazil, the Northeast region and the semiarid region of Minas Gerais are characterized by sunshine, strong winds and lack of rainfall, resulting in severe climatic instabilities for the local population. However, such natural climatic characteristics of these regions are ideal for the development of renewable energies, particularly solar and wind energy through micro energy generation, bringing benefits to the population.

Micro energy generation is a strong trend around the world, positively boosting various sectors of the economy in many countries, such as Germany, Italy, the United States and China.

In this regard, prior art document CN103352802 refers to a vertical axis wind power generator and a solar collecting device used in conjunction. Solar collectors are arranged on a base so as to heat tubes through which bathing water runs. The vertical axis wind generator is associated with the collectors, generating electricity. In this generator, wind is used for the generation of electric energy, while the captured heat is used for heating.

Document GB 2515577 describes a floating platform of renewable energy for wind and water recovery, as well as solar energy. The wind energy is obtained through a vertical axis wind generator and there are platforms where the solar panels are located. This device does is not as simple as to allow its use for energy microgeneration.

Hence, by evaluating the known technical developments of the state of the art, it is found that the development of devices capable of transforming energy microgeneration into an alternative, simple, low cost and social development-motivating sustainable solution is necessary.

### OBJECTIVES OF THE INVENTION

Thus, this invention aims to provide a simple, small and low cost hybrid electric power generation device capable of enabling energy microgeneration in homes, urban buildings and, especially, in regions of severe climatic instabilities with socially and economically vulnerable population.

### BRIEF DESCRIPTION OF THE INVENTION

The present invention relates to a hybrid electric power generating device comprising a wind power generation module and at least one solar power generation module, said wind power generation module formed by a vertical generator, and said solar energy generation module formed by at least one solar energy capturing plate, the vertical generator of the wind power generation module, a plurality of blades axially and concentrically disposed relative to a central shaft of the vertical generator, said blades being manufactured from polyethylene terephthalate and arranged in the central shaft at an offset angle between each other, and the wind power generation module receives in its upper portion at least one solar energy generation module in order to provide electric power cogeneration, said generation module comprising at least one solar energy capturing plate supported by a hydraulic mechanism that moves the solar energy capturing plate so as to position it in more favourable directions for capturing solar energy throughout the day, with better use of the generating source.

### BRIEF DESCRIPTION OF THE DRAWINGS

It follows a more detailed description of the present invention, based on one embodiment represented in the drawings. The figures show:
Figure 1 - it is a perspective view of one of the blades comprising the hybrid electric power generating device, subject matter of the invention;
Figure 2 - it is a schematic view of the wind generation module of the hybrid electric power generating device, subject matter of the invention;
Figure 3 - is a view of the hybrid electric power generation device, subject matter of the invention, containing the wind generation module and the solar generation module;
Figure 4 - it us a schematic view in details of the solar generation module arranged together with the wind power module;
Figure 5 - it is a detailed view of the hydraulic mechanism that forms the solar generation module; and
Figure 6 - it is a schematic view of the solar energy module with movement of the solar energy capturing plates.

### DETAILED DESCRIPTION OF THE INVENTION

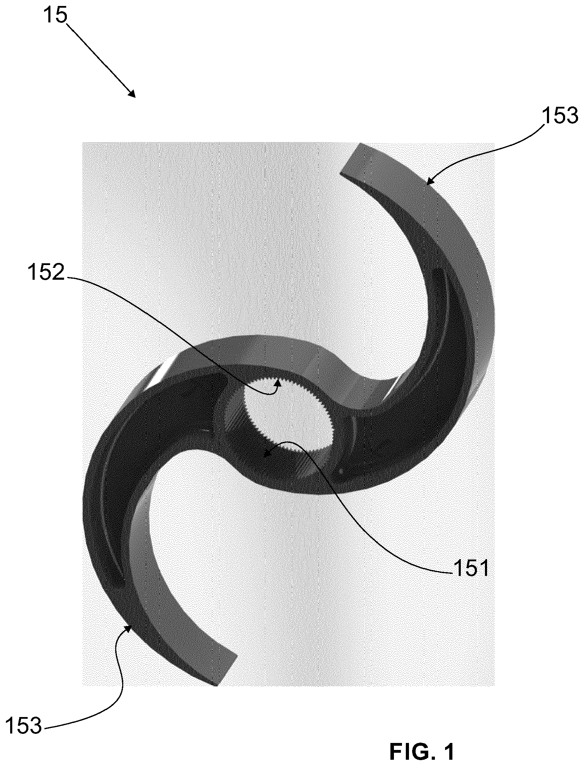

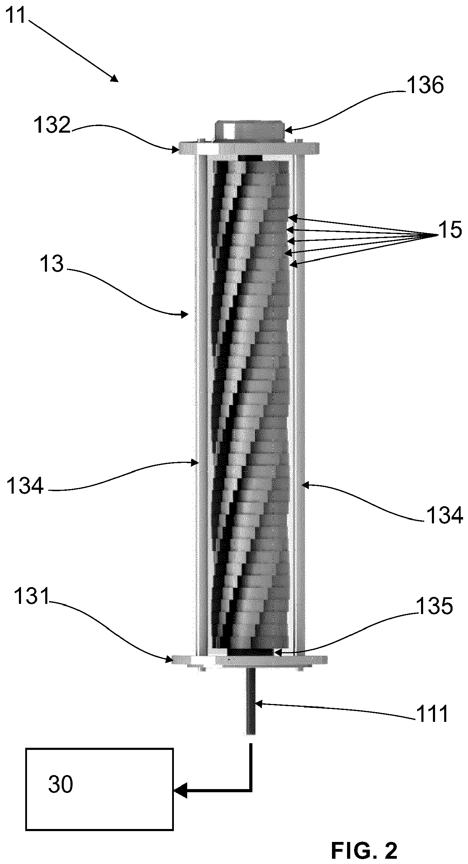

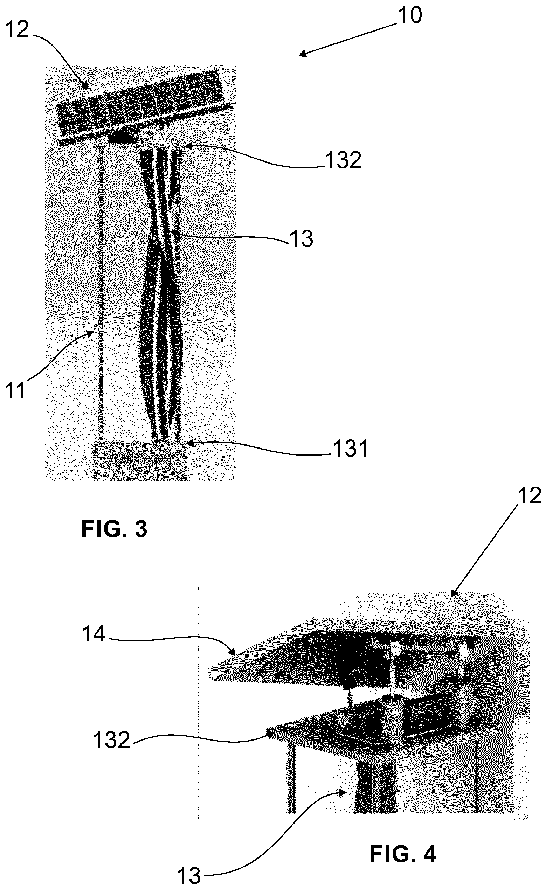

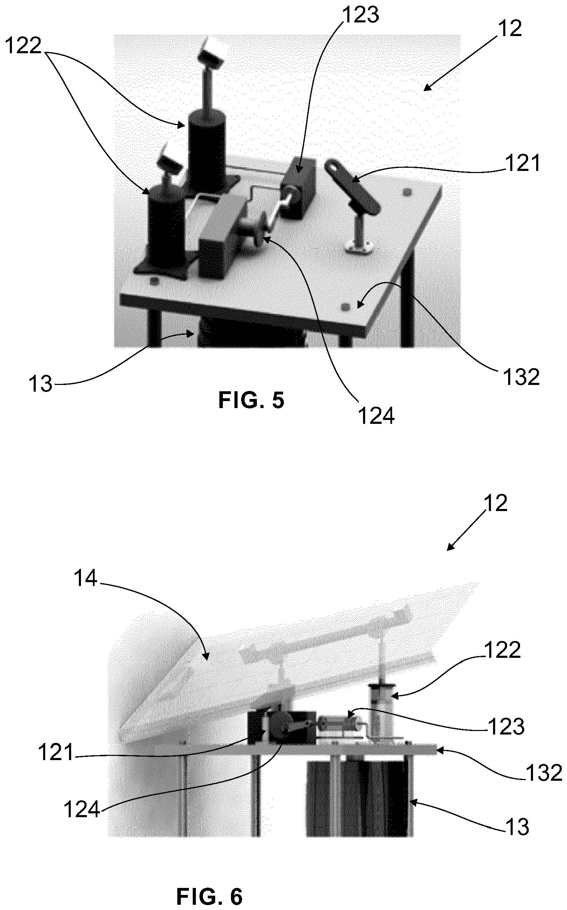

According to a preferred embodiment and as can be seen in Figures 1-6, the hybrid electric power generating device 10, subject matter of this invention, comprises a wind power generation module 11 and at least one solar energy generation module 12 (Figure 3).

The wind power generation module 11 comprises a vertical generator 13 consisting of a tower supported by a lower top 131 and an upper top 132 axially parallel to the lower top 131 and enclosing a stack formed by a plurality of blades 15. The blades 15 are axially disposed relative to each other and concentrically with respect to a central shaft 111. The tops: upper 131 and lower 132 are made of anodized aluminium and comprise ball bearings in the socket with the central shaft 111.

The central shaft 111 is also made of aluminium and has first longitudinal grooves distributed along its perimeter, preferably 90 grooves with a triangular profile. Each blade 15 is disposed at an offset angle to each other, this offset angle being preferably 4°, but angles other than 4° may be used.

The vertical generator 13 further comprises supporting rods 134 made of polished stainless steel and whose ends are fastened to the lower top 131 and to the upper top 132. Preferably, four supporting rods 134 are disposed equidistant from each other, preferably at angles of 90° along the perimeter of the lower top 131 and upper top 132.

The blades 15 are made of 100% recycled polyethylene terephthalate (PET) Each blade 15 comprises at least one pair of wing-shaped projections 153 providing excellent aerodynamic performance and the wind works favourably enabling rotation of the blades 15 both clockwise and counter clockwise depending on the position adopted in the assembly.

The weight of each blade 15 is approximately 500 grams, meaning the use of approximately ten 2-liter PET bottles that would be discarded in nature. Each wind power generation module 11 comprises at least 60 blades 15. This means that at least approximately 600 PET bottles are withdrawn from the nature. The larger the wind power generation module 11, the greater the number of blades used, resulting in a greater amount of PET withdrawn from nature.

Still with respect to the blades 15, each blade 15 comprises a central through hole 151, along whose wall second longitudinal grooves 152 are provided, distributed along its perimeter, preferably 90 grooves with a triangular profile. These second longitudinal grooves 152 enable the always offset fit of each blade 15 in the central shaft 111 of the vertical generator 13, engaging the second longitudinal grooves 152 with the first longitudinal grooves of the central shaft 111. As already described, each blade 15 is disposed on the central shaft 111 with a 4° offset angle, but other multiple angles of 4 can be used, including the zero angle.

The wind power generation module 11 is designed for urban use without the safety restrictions common to conventional generators. Thus, since it is a vertical generator 14 with bi-supported and interlocking shaft, even if there is a rupture and even a loss of one of the blades 15, there will be no unbalance and catastrophic failure so common in accidents with horizontal or even mono-supported vertical generators.

As can be seen in figure 3, in the hybrid electric power generating device 10, subject matter of this invention, the wind power generation module 11 receives, in its upper portion, at least one solar energy generation module 12 so as to provide electricity cogeneration.

More specifically, the solar power generation module 12 is secured to the upper top 132 of the vertical generator 13, adjacent to an attachment shoulder 136, forming a solar capturing area greater than the area of lower top 131. Preferably, the solar capturing area will have up to twice the area used by the installation base of the vertical generator tower 13.

As shown in figures 3-6, the solar power generation module 12 is formed by at least one solar energy capturing plate 14 three-supported on the upper top 132 of the vertical generator 13 by a hydraulic mechanism, formed by two main pistons 122, arranged in alignment with each other, and a rotating support 121, parallel to the two main pistons 122. The rotating support 121 and the two main pistons 122 oscillate, alternately expanding and contracting, in order to move the solar energy capturing plate 14 so as to move it in more favourable directions for capturing solar energy throughout the day, following the position of the sun during the day and returning to the initial position at night. This initial position coincides with the position of the rising sun.

The hydraulic mechanism is driven by a secondary double action piston 123 which, in turn, is controlled by a connecting rod 124 associated with a low consumption timer. This connecting rod 124 is able to make a complete turn every 24 hours. This mechanical/hydraulic mechanism dispenses electronic components and periodic calibrations.

When several hybrid devices 10 are positioned in an area so as to have their heights offset, these hybrid devices 10 create a true field of interleaved solar panels, increasing the area of exposure to the sun rays and, consequently, increasing the efficiency of the energy plant.

The hybrid electric power generating device 10 is associated with a generation system 30 formed by at least one alternator, at least one converter and at least one battery (not shown) disposed in an airtight casing made of aluminium. Because it is airtight, the casing prevents the generation system 30 from being damaged by the weather, since it is positioned next to the base of the wind power generation module 11, exposed to the environment.

The wind blows against the projections 153 of the blades 15 and make them rotate. The rotation of the blades 15 is imposed on the shaft axis 111 of the vertical generator 13, which rotates supported on a rolling bearing 135 positioned adjacent to the lower top 131. This rotation of the central shaft 111, resulting from the wind energy captured by the blades 15, is transformed into electrical energy which, in turn, is transferred to the generation system 30.

Solar energy uptake is carried out by the solar capturing plates 14 of the solar power generation module 12 and transformed and transferred to the generation system 30 by common devices already known from the state of the art.

Therefore, in addition to the fact that the hybrid device 10 generates power directly for the grid, reducing or even reversing the consumption count, the hybrid device 10 is further provided with a battery capable of maintaining the emergency lighting of the building where the device is installed for some time, in the event of a power failure in the grid operated by the local utility.

In addition to being lightweight, the hybrid device 10, subject matter of the present invention, is simple, small and low-cost, and is capable of making energy microgeneration feasible in homes, small businesses and communities.

Although only one preferred embodiment was described, it must be understood that the scope of the instant invention covers other possible alternatives and that it is limited only by the content of the claims, the possible equivalents being included therein.

## Claims

1. A hybrid electric power generating device (10), comprising a wind power generation module (11) and at least one solar energy generation module (12), said wind power generation module (11) being formed by a vertical generator (13), and said solar power generation module (12) being formed by at least one solar energy capturing plate (14), the hybrid electric power generation device (10) being **characterized in that**:
- the vertical generator (13) of the wind power generation module (11) comprises a plurality of blades (15) axially and concentrically disposed in relation to a central shaft (111) of the vertical generator (13), said blades (15) being manufactured from polyethylene terephthalate and disposed on the central shaft (111) with an offset angle between each other; and
- the wind power generation module (11) receives in its upper portion at least one solar energy generation module (12) so as to provide electric energy cogeneration, said solar generation module (12) comprising at least one solar energy capturing plate (14) supported on a hydraulic mechanism that moves the solar energy capturing plate (14) so as to position it in more favorable directions for capturing solar energy throughout the day.

2. The device according to claim 1, **characterized in that** the vertical generator (13) consists of a tower supported by a lower top (131) and an upper top (132), axially parallel to the lower top and enclosing a stack formed by a plurality of blades (15) axially disposed there between and concentrically with respect to the central shaft (111), the blades (15) being disposed in the stack at an offset angle of at least 4° to each other.

3. The device according to claim 2, **characterized in that** the central shaft (111) comprises longitudinal grooves distributed along its perimeter, preferably 90 grooves with a triangular profile.

4. The device according to claim 3, **characterized in that** the vertical generator (13) further comprises supporting rods (134) whose ends are fastened to the lower top (131) and to the upper top (132), said rods (134) being distributed equidistant from each other, preferably at 90° angles.

5. The device according to claim 1, **characterized in that** it is associated with a generation system (30) formed by at least one alternator, at least one converter and at least one battery.

6. The device according to claim 1, **characterized in that** the blades (15) are made of 100% recycled polyethylene terephthalate (PET), each blade (15) comprising at least one pair of wing-shaped projections (153).

7. The device according to claim 6, **characterized in that** each blade (15) comprises a central through hole (151), in whose inner wall of the central through hole (151), second longitudinal grooves (152) are distributed to the blade along its perimeter, preferably 90 grooves with a triangular profile.

8. The device according to claim 7, **characterized in that** each wind power generation module (11) comprises at least 60 blades (15).

9. The device according to claim 2, **characterized in that** the solar energy generation module (12) is fastened to the upper top (132) of the vertical generator (13), forming a sun capturing area greater than the area of lower top (131).

10. The device according to claim 1, **characterized in that** the hydraulic mechanism of the solar energy generation module (12) comprises two main pistons (122) arranged in alignment with each other and a rotating support (121) positioned parallel to the pistons (122) in order to maintain the three-supported solar energy capturing plate (14).

11. Device according to claim 10, **characterized in that** the rotating support (121) and the two main pistons (122) oscillate, alternately expanding and contracting, and moving the solar energy capturing plate (14).

12. The device according to claim 1, **characterized in that** the hydraulic mechanism is driven by a secondary double-action piston (123) which is controlled by a connecting rod (124) associated with a timer.

13. The device according to claim 12, **characterized in that** the connecting rod (124) is capable of a full turn every 24 hours.
